# EUROPEAN PATENT APPLICATION

(11) **EP 4 760 820 A1**
(43) Date of publication of application: **17.06.2026**
(21) Application number: 24851601.5
(22) Date of filing: 23.07.2024
(51) Int. Cl.: H01M 4/62, C08K 3/04, C08K 3/22, C08L 33/14, C08L 101/00, C08L 101/12, H01M 4/13, H01M 4/58, H01M 4/139

(54) **BINDER COMPOSITION FOR NONAQUEOUS SECONDARY BATTERY ELECTRODES, SLURRY COMPOSITION FOR NONAQUEOUS SECONDARY BATTERY ELECTRODES, ELECTRODE FOR NONAQUEOUS SECONDARY BATTERIES, AND NONAQUEOUS SECONDARY BATTERY**

(30) Priority: 08.08.2023 JP 2023129541
(71) Applicant: Zeon Corporation, Tokyo 100-8246 (JP)
(72) Inventor: MATSUO, Yusaku, Tokyo 100-8246 (JP); MIYAMAE, Tsubasa, Tokyo 100-8246 (JP)
(74) Representative: Maiwald GmbH
(86) International application number: PCT/JP2024/026352
(87) International publication number: WO 2025/033173

(57) **Abstract**

A binder composition for a non-aqueous secondary battery electrode contains a polymer X dissolved in water. The polymer X is water-soluble and has a total proportional content of a conjugated diene monomer unit and an alkylene structural unit of not less than 25.0 mass% and not more than 58.0 mass%.

## Description

### TECHNICAL FIELD

The present disclosure relates to a binder composition for a non-aqueous secondary battery electrode, a slurry composition for a non-aqueous secondary battery electrode, an electrode for a non-aqueous secondary battery, and a non-aqueous secondary battery.

### BACKGROUND

Non-aqueous secondary batteries (hereinafter, also referred to simply as "secondary batteries"), such as lithium ion secondary batteries, have characteristics such as compact size, light weight, high energy density, and the ability to be repeatedly charged and discharged, and are used in a wide variety of applications. Consequently, in recent years, studies have been made to improve battery members such as electrodes for the purpose of achieving even higher non-aqueous secondary battery performance.

An electrode for a secondary battery normally includes an electrode mixed material layer. The electrode mixed material layer is formed through application and drying, on a current collector, of a composition in the form of a slurry (slurry composition for a non-aqueous secondary battery electrode) having an electrode active material, a binder composition for a non-aqueous secondary battery electrode containing a polymer that serves as a binder, and so forth dispersed in a dispersion medium, for example.

In recent years, there have been attempts to improve binder compositions used in the formation of electrode mixed material layers in order to achieve further improvement of secondary battery performance (for example, refer to Patent Literature (PTL) 1).

For example, PTL 1 discloses that a copolymer that has a weight-average molecular weight of 5,000 to 400,000, that includes a unit derived from (meth)acrylonitrile and a unit derived from a conjugated diene monomer, and in which the proportion constituted by the unit derived from (meth)acrylonitrile is 15 mass% to 50 mass% is compounded as a dispersant for compounding in a conductive material dispersion.

### CITATION LIST

### Patent Literature

PTL 1: JP2020-187866A

### SUMMARY

### (Technical Problem)

From a viewpoint of increasing producibility and performance of a secondary battery, it is desirable for a binder composition to increase the dispersibility of a slurry composition that is produced using the binder composition and to increase the flexibility of an obtained electrode mixed material layer.

However, when using a composition in which the copolymer according to the conventional technique described above is compounded, there has been room for improvement in terms of dispersibility of an obtained slurry composition and flexibility of an obtained electrode mixed material layer.

Accordingly, one object of the present disclosure is to provide a binder composition for a non-aqueous secondary battery electrode that can increase dispersibility of a slurry composition and flexibility of an electrode mixed material layer.

Another object of the present disclosure is to provide a slurry composition for a non-aqueous secondary battery electrode that has excellent dispersibility and can form an electrode mixed material layer having excellent flexibility.

Another object of the present disclosure is to provide an electrode for a non-aqueous secondary battery that includes an electrode mixed material layer formed using this slurry composition for a non-aqueous secondary battery electrode.

Another object of the present disclosure is to provide a non-aqueous secondary battery that includes this electrode for a non-aqueous secondary battery.

### (Solution to Problem)

The inventors conducted diligent investigation to achieve the objects set forth above. The inventors discovered that with a binder composition for a non-aqueous secondary battery electrode in which a polymer X that is water-soluble and that has a total proportional content of a conjugated diene monomer unit and an alkylene structural unit of not less than 25.0 mass% and not more than 58.0 mass% is dissolved in water, it is possible to increase dispersibility of a slurry composition and flexibility of an electrode mixed material layer, and, in this manner, completed the present disclosure.

Specifically, with the aim of advantageously solving the problem set forth above, [1] a presently disclosed binder composition for a non-aqueous secondary battery electrode comprises a polymer X and water, wherein the polymer X is water-soluble and has a total proportional content of a conjugated diene monomer unit and an alkylene structural unit of not less than 25.0 mass% and not more than 58.0 mass%. Through a binder composition in which the water-soluble polymer X having a specific chemical composition is dissolved in this manner, it is possible to increase dispersibility of a slurry composition and flexibility of an electrode mixed material layer.

Note that when a polymer is said to be "water-soluble" in the present specification, this means that when 0.5 g (in terms of solid content) of the polymer is dissolved in 100 g of water at a temperature of 25°C, the amount of insoluble content is less than 5.0 mass%. Also note that a "monomer unit" of a polymer refers to a "repeating unit derived from the monomer that is included in a polymer obtained using that monomer". Moreover, the proportional contents of various repeating units (monomer units and structural units) in a polymer can be measured by a nuclear magnetic resonance (NMR) method such as ¹H-NMR.

[2] In the binder composition for a non-aqueous secondary battery electrode according to the foregoing [1], the polymer X preferably includes a hydroxy group-containing (meth)acrylic acid ester monomer unit in a proportion of not less than 5.0 mass% and not more than 25.0 mass%. When the polymer X includes a hydroxy group-containing (meth)acrylic acid ester monomer unit within the range set forth above, flexibility of an obtained electrode mixed material layer can be increased, and output characteristics and cycle characteristics of an obtained secondary battery can be enhanced.

Note that in the present specification, "(meth)acryl" is used to indicate "acryl" or "methacryl".

[3] In the binder composition for a non-aqueous secondary battery electrode according to the foregoing [1] or [2], the polymer X preferably includes an acidic group-containing monomer unit in a proportion of not less than 20.0 mass% and not more than 35.0 mass%. When the polymer X includes an acidic group-containing monomer unit within the range set forth above, dispersibility of a slurry composition and flexibility of an electrode mixed material layer can be even further increased.

[4] In the binder composition for a non-aqueous secondary battery electrode according to any one of the foregoing [1] to [3], the polymer X preferably includes a non-hydroxy group-containing (meth)acrylic acid ester monomer unit in a proportion of not less than 10.0 mass% and not more than 40.0 mass%. When the polymer X includes a non-hydroxy group-containing (meth)acrylic acid ester within the range set forth above, flexibility of an obtained electrode mixed material layer with respect to a current collector and cycle characteristics of an obtained secondary battery can be even further enhanced.

[5] In the binder composition for a non-aqueous secondary battery electrode according to any one of the foregoing [1] to [4], the polymer X preferably has a weight-average molecular weight of not less than 100,000 and not more than 1,000,000. When the weight-average molecular weight of the polymer X is within the range set forth above, dispersibility of an obtained slurry composition and close adherence to a current collector of an obtained electrode mixed material layer can be even further increased.

The "weight-average molecular weight" of the polymer X can be measured according to a method described in the EXAMPLES section of the present specification.

Moreover, with the aim of advantageously solving the problem set forth above, [6] a presently disclosed slurry composition for a non-aqueous secondary battery electrode comprises: an electrode active material; and the binder composition for a non-aqueous secondary battery electrode according to any one of the foregoing [1] to [5]. The slurry composition set forth above has excellent dispersibility and can form an electrode mixed material layer having excellent flexibility.

[7] The slurry composition for a non-aqueous secondary battery electrode according to the foregoing [6] preferably further comprises a particulate polymer Y that includes a hydrophilic group. When the slurry composition further contains a particulate polymer Y that includes a hydrophilic group, dispersibility of the slurry composition and close adherence to a current collector and flexibility of an electrode mixed material layer formed using the slurry composition can be further improved.

[8] In the slurry composition for a non-aqueous secondary battery electrode according to the foregoing [6] or [7], proportional content of the particulate polymer Y is preferably 5 mass% or less when all solid content contained in the slurry composition for a non-aqueous secondary battery electrode is taken to be 100 mass%. When the proportional content of the particulate polymer Y is within the specific range set forth above, dispersibility of the slurry composition and close adherence to a current collector and flexibility of an electrode mixed material layer formed using the slurry composition can be improved, and internal resistance of a secondary battery can be reduced.

[9] In the slurry composition for a non-aqueous secondary battery electrode according to any one of the foregoing [6] to [8], the electrode active material preferably includes a lithium-containing complex metal oxide having an olivine structure. When olivine-type lithium iron phosphate is used as the electrode active material, stability against overcharging of a secondary battery can be improved.

[10] The slurry composition for a non-aqueous secondary battery electrode according to any one of the foregoing [6] to [9] preferably further comprises a conductive material including either or both of a particulate conductive material and one or more carbon nanotubes. When the slurry composition contains either or both of a particulate conductive material and carbon nanotubes as a conductive material, internal resistance of a non-aqueous secondary battery can be reduced and output characteristics of the non-aqueous secondary battery can be even further enhanced.

Furthermore, with the aim of advantageously solving the problem set forth above, [11] a presently disclosed electrode for a non-aqueous secondary battery comprises an electrode mixed material layer formed using the slurry composition for a non-aqueous secondary battery electrode according to any one of the foregoing [6] to [10]. This electrode for a non-aqueous secondary battery has excellent flexibility and can cause a secondary battery to display excellent battery characteristics.

Also, with the aim of advantageously solving the problem set forth above, [12] a presently disclosed non-aqueous secondary battery comprises the electrode for a non-aqueous secondary battery according to the foregoing [11]. This non-aqueous secondary battery has excellent battery characteristics.

### (Advantageous Effect)

According to the present disclosure, it is possible to provide a binder composition for a non-aqueous secondary battery electrode that can increase dispersibility of a slurry composition and flexibility of an electrode mixed material layer.

Moreover, according to the present disclosure, it is possible to provide a slurry composition for a non-aqueous secondary battery electrode that has excellent dispersibility and can form an electrode mixed material layer having excellent flexibility.

Furthermore, according to the present disclosure, it is possible to provide an electrode for a non-aqueous secondary battery that includes an electrode mixed material layer formed using the presently disclosed slurry composition for a non-aqueous secondary battery electrode.

Also, according to the present disclosure, it is possible to provide a non-aqueous secondary battery that includes the presently disclosed electrode for a non-aqueous secondary battery.

### DETAILED DESCRIPTION

The following provides a detailed description of embodiments of the present disclosure.

The presently disclosed binder composition for a non-aqueous secondary battery electrode can be used in production of the presently disclosed slurry composition for a non-aqueous secondary battery electrode. Moreover, the presently disclosed slurry composition for a non-aqueous secondary battery electrode can be used in production of an electrode of a non-aqueous secondary battery such as a lithium ion secondary battery. Furthermore, a feature of the presently disclosed non-aqueous secondary battery is that the presently disclosed electrode for a non-aqueous secondary battery formed using the presently disclosed slurry composition for a non-aqueous secondary battery electrode is used therein.

### (Binder composition for non-aqueous secondary battery electrode)

The presently disclosed binder composition for a non-aqueous secondary battery electrode is a binder composition for a non-aqueous secondary battery electrode that contains a water-soluble polymer X satisfying a specific chemical composition. A feature of the water-soluble polymer X satisfying a specific chemical composition is that the total proportional content of a conjugated diene monomer unit and an alkylene structural unit is not less than 25.0 mass% and not more than 58.0 mass%. Moreover, the presently disclosed binder composition for a non-aqueous secondary battery electrode is capable of producing a slurry composition having excellent dispersibility and can provide an obtained electrode mixed material layer with excellent flexibility as a result of the water-soluble polymer X that has a specific chemical composition being dissolved in water in the presently disclosed binder composition for a non-aqueous secondary battery electrode. The presently disclosed binder composition for a non-aqueous secondary battery electrode may optionally further contain other components in addition to the specific polymer X described above.

### <Polymer X>

The polymer X is a water-soluble component that can function as a dispersant for causing good dispersion of components such as an electrode active material and a conductive material in a slurry composition that is produced using the binder composition. In addition, the polymer X can also function as a binder in an electrode mixed material layer that is formed using the slurry composition.

### <<Chemical composition of polymer X>>

The polymer X is required to have a total proportional content of a conjugated diene monomer unit and an alkylene structural unit of not less than 25.0 mass% and not more than 58.0 mass%. In addition, it is preferable that the polymer X includes a hydroxy group-containing (meth)acrylic acid ester monomer unit, an acidic group-containing monomer unit, and a non-hydroxy group-containing (meth)acrylic acid ester monomer unit. The polymer X may optionally further include other repeating units besides those mentioned above.

### [Conjugated diene monomer unit]

The conjugated diene monomer unit can be formed from a conjugated diene monomer. The conjugated diene monomer may be a conjugated diene compound such as 1,3-butadiene, isoprene, 2,3-dimethyl-1,3-butadiene, or 1,3-pentadiene, for example. One of these conjugated diene monomers can be used individually, or two or more of these conjugated diene monomers can be used in combination. Of these conjugated diene monomers, 1,3-butadiene is preferable.

### [Alkylene structural unit]

The alkylene structural unit is a repeating unit composed only of an alkylene structure represented by a general formula -CₙH₂ₙ- (n is an integer of 2 or more). The inclusion of the alkylene structural unit in the polymer X can improve dispersibility of a conductive material in a conductive material dispersion liquid that is produced using the binder composition.

Although the alkylene structural unit may be linear or branched, the alkylene structural unit is preferably linear (i.e., is preferably a linear alkylene structural unit) from a viewpoint of further improving dispersibility of a conductive material in a conductive material dispersion liquid. Moreover, the alkylene structural unit preferably has a carbon number of 4 or more (i.e., n in the preceding general formula -CₙH₂ₙ- is preferably an integer of 4 or more).

Examples of methods by which the alkylene structural unit can be introduced into the polymer X include, but are not specifically limited to, the following methods (1) and (2).
(1) A method in which a polymer is produced from a monomer composition containing a conjugated diene monomer and then this polymer is hydrogenated so as to convert a conjugated diene monomer unit to an alkylene structural unit
(2) A method in which a polymer is produced from a monomer composition containing a 1-olefin monomer

Of these methods, method (1) is preferable in terms of ease of production of the polymer.

In other words, the alkylene structural unit is preferably a structural unit obtained through hydrogenation of a conjugated diene monomer unit such as described above (i.e., is preferably a hydrogenated conjugated diene unit).

Moreover, the 1-olefin monomer may be 1-butene, 1-hexene, or the like, for example.

One of these conjugated diene monomers or 1-olefin monomers can be used individually, or two or more of these conjugated diene monomers or 1-olefin monomers can be used in combination.

Note that examples of conjugated diene monomers that can be used in method (1) include the various conjugated diene monomers that were described in the "Conjugated diene monomer unit" section, of which, 1,3-butadiene monomer is preferable. In other words, the alkylene structural unit is preferably a structural unit obtained through hydrogenation of a conjugated diene monomer unit (i.e., the alkylene structural unit is preferably a hydrogenated conjugated diene unit), and is more preferably a structural unit obtained through hydrogenation of a 1,3-butadiene unit (i.e., the alkylene structural unit is more preferably a hydrogenated 1,3-butadiene unit). The hydrogenation can be performed by a commonly known method such as described further below.

Note that in a case in which the alkylene structural unit has been introduced into the polymer through method (1), a conjugated diene monomer unit can remain in the polymer X in a situation in which conjugated diene monomer unit hydrogenation is incomplete. In other words, the polymer X can optionally include a conjugated diene monomer unit as a repeating unit.

The total proportional content of the conjugated diene monomer unit and the alkylene structural unit in the polymer X when all repeating units (total of structural units and monomer units) in the polymer X are taken to be 100 mass% is required to be 25.0 mass% or more, and is preferably 27.5 mass% or more, and more preferably 30.0 mass% or more. Moreover, the total proportional content of the conjugated diene monomer unit and the alkylene structural unit in the polymer X when all repeating units (total of structural units and monomer units) in the polymer X are taken to be 100 mass% is required to be 58.0 mass% or less, and is preferably 45.0 mass% or less, and more preferably 40.0 mass% or less. When the total proportional content of the alkylene structural unit and the conjugated diene monomer unit in the polymer X is not less than any of the lower limits set forth above, flexibility and close adherence to a current collector of an obtained electrode mixed material layer can be increased, and, as a result, cycle characteristics of an obtained secondary battery can be enhanced. Moreover, when the total proportional content of the alkylene structural unit and the conjugated diene monomer unit in the polymer X is not more than any of the upper limits set forth above, reduction of water-solubility of the polymer X can be restricted, and dispersibility of an obtained slurry composition can be increased.

Note that the polymer X should include at least one of the conjugated diene monomer unit and the alkylene structural unit. In a case in which one of the conjugated diene monomer unit and the alkylene structural unit is not included in the polymer X, the total proportional content of the conjugated diene monomer unit and the alkylene structural unit described above is the proportional content of the monomer unit/structural unit that is present. For example, in a case in which there is complete conjugated diene monomer unit hydrogenation in method (1) or a case in which the polymer is produced by method (2) (and in which a conjugated diene monomer unit is not separately introduced), the polymer X includes the alkylene structural unit but does not include the conjugated diene monomer unit. Alternatively, in a case in which conjugated diene monomer unit hydrogenation is incomplete in method (1), the polymer X includes the conjugated diene monomer unit and the alkylene structural unit.

### [Hydroxy group-containing (meth)acrylic acid ester monomer unit]

The polymer X preferably further includes a hydroxy group-containing (meth)acrylic acid ester monomer unit (i.e., at least one of a hydroxy group-containing acrylic acid ester monomer unit and a hydroxy group-containing methacrylic acid ester monomer unit). Examples of hydroxy group-containing acrylic acid ester monomers that can form the hydroxy group-containing acrylic acid ester monomer unit in the polymer X include alkanol esters of acrylic acid (also referred to as "acrylic acid hydroxyalkyl ester monomers") such as 2-hydroxyethyl acrylate, 2-hydroxypropyl acrylate, and 4-hydroxybutyl acrylate; and esters of polyalkylene glycol and acrylic acid (also referred to as "acrylic acid polyalkylene glycol ester monomers") represented by a general formula CH₂=CH-COO-(C_{q}H_{2q}O)ₚ-H (in the formula, p is an integer of 2 to 9 and q is an integer of 2 to 4). Note that one of these hydroxy group-containing acrylic acid ester monomers may be used individually, or two or more of these hydroxy group-containing acrylic acid ester monomers may be used in a freely selected ratio.

In particular, it is preferable to use an alkanol ester of acrylic acid (acrylic acid hydroxyalkyl ester monomer) such as 2-hydroxyethyl acrylate, 2-hydroxypropyl acrylate, or 4-hydroxybutyl acrylate as a hydroxy group-containing acrylic acid ester monomer.

Examples of hydroxy group-containing methacrylic acid ester monomers that can form the hydroxy group-containing methacrylic acid ester monomer unit in the polymer X include alkanol esters of methacrylic acid (also referred to as "methacrylic acid hydroxyalkyl ester monomers") such as 2-hydroxyethyl methacrylate and 2-hydroxypropyl methacrylate; and esters of polyalkylene glycol and methacrylic acid (also referred to as "methacrylic acid polyalkylene glycol ester monomers") represented by a general formula CH₂=C(CH₃)-COO-(CₛH₂ₛO)ᵣ-H (in the formula, r is an integer of 2 to 9 and s is an integer of 2 to 4). Note that one of these hydroxy group-containing methacrylic acid ester monomers may be used individually, or two or more of these hydroxy group-containing methacrylic acid ester monomers may be used in a freely selected ratio.

In particular, it is preferable to use an alkanol ester of methacrylic acid (methacrylic acid hydroxyalkyl ester monomer) such as 2-hydroxyethyl methacrylate or 2-hydroxypropyl methacrylate as a hydroxy group-containing methacrylic acid ester monomer.

The proportional content of the hydroxy group-containing (meth)acrylic acid ester monomer unit in the polymer X when all monomer units (all repeating units) included in the polymer X are taken to be 100 mass% is preferably 5.0 mass% or more, more preferably 7.5 mass% or more, and even more preferably 10.0 mass% or more, and is preferably 25.0 mass% or less, more preferably 22.5 mass% or less, and even more preferably 20.0 mass% or less. When the proportional content of the hydroxy group-containing (meth)acrylic acid ester monomer unit in the polymer X is not less than any of the lower limits set forth above, flexibility and close adherence to a current collector of an obtained electrode mixed material layer can be increased, presumably due to good adsorption of the polymer X to an electrode active material, a conductive material, and the like when a slurry composition is produced, and, as a result, cycle characteristics of an obtained secondary battery can be enhanced. Moreover, when the proportional content of the hydroxy group-containing (meth)acrylic acid ester monomer unit in the polymer X is not more than any of the upper limits set forth above, dispersibility of an electrode active material, a conductive material, and the like in a produced slurry composition can be even further increased, and flexibility of an obtained electrode mixed material layer can also be even further increased. This makes it possible to enhance output characteristics and cycle characteristics of an obtained secondary battery.

### [Acidic group-containing monomer unit]

The polymer X preferably further includes an acidic group-containing monomer unit. Examples of acidic group-containing monomers that can form the acidic group-containing monomer unit in the polymer X include carboxy group-containing monomers, sulfo group-containing monomers, and phosphate group-containing monomers.

Examples of carboxy group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid esters such as methyl allyl maleate, diphenyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Furthermore, an acid anhydride that produces a carboxy group upon hydrolysis can also be used as a carboxy group-containing monomer.

Other examples include monoesters and diesters of α,β-ethylenically unsaturated polybasic carboxylic acids such as monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, and dibutyl itaconate.

Note that a hydrogen atom in a carboxy group of a carboxy group-containing monomer such as described above may have been substituted by an inorganic ion or an organic ion such that the monomer is in the form of an inorganic salt or an organic salt. In other words, the carboxy group-containing monomer may be in the form of a carboxylate salt.

Examples of sulfo group-containing monomers include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid.

Note that a hydrogen atom in a sulfo group of a sulfo group-containing monomer such as described above may have been substituted by an inorganic ion or an organic ion such that the monomer is in the form of an inorganic salt or an organic salt. In other words, the sulfo group-containing monomer may be in the form of a sulfonate salt.

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

Note that a hydrogen atom in a phosphate group of a phosphate group-containing monomer such as described above may have been substituted by an inorganic ion or an organic ion such that the monomer is in the form of an inorganic salt or an organic salt. In other words, the phosphate group-containing monomer may be in the form of a phosphate salt.

One of these acidic group-containing monomers may be used individually, or two or more of these acidic group-containing monomers may be used in a freely selected ratio.

Moreover, from a viewpoint of further improving close adherence to a current collector of a formed electrode mixed material layer, it is preferable to use a carboxy group-containing monomer or a sulfo group-containing monomer, more preferable to use a carboxy group-containing monomer, and even more preferable to use methacrylic acid as an acidic group-containing monomer.

The proportional content of the acidic group-containing monomer unit in the polymer X when all monomer units (all repeating units) included in the polymer X are taken to be 100 mass% is preferably 20.0 mass% or more, more preferably 21.5 mass% or more, and even more preferably 23.0 mass% or more, and is preferably 35.0 mass% or less, more preferably 32.5 mass% or less, and even more preferably 30.0 mass% or less. When the proportional content of the acidic group-containing monomer unit in the polymer X is not less than any of the lower limits set forth above, it is possible to suppress weakening of electrostatic repulsion due to the polymer X when adsorbed to an electrode active material or the like upon production of a slurry composition and increase dispersibility of the slurry composition, thereby enabling an increase of uniformity of an electrode mixed material layer and enhancement of output characteristics and cycle characteristics of an obtained secondary battery. When the proportional content of the acidic group-containing monomer unit in the polymer X is not more than any of the upper limits set forth above, hardening of the polymer X can be suppressed, flexibility of an electrode mixed material layer can be increased, and close adherence to a current collector of an electrode mixed material layer can also be increased. This also makes it possible to enhance output characteristics and cycle characteristics of an obtained secondary battery.

### [Non-hydroxy group-containing (meth)acrylic acid ester monomer unit]

The polymer X preferably further includes a non-hydroxy group-containing (meth)acrylic acid ester monomer unit. The non-hydroxy group-containing (meth)acrylic acid ester monomer unit may be a non-hydroxy group-containing (meth)acrylic acid alkyl ester monomer unit, for example.

A (meth)acrylic acid alkyl ester that does not include a hydroxy group such as methyl (meth)acrylate, ethyl (meth)acrylate, butyl (meth)acrylate, or 2-ethylhexyl (meth)acrylate can be used as a non-hydroxy group-containing (meth)acrylic acid alkyl ester monomer. Note that one of these non-hydroxy group-containing (meth)acrylic acid alkyl ester monomers may be used individually, or two or more of these non-hydroxy group-containing (meth)acrylic acid alkyl ester monomers may be used in a freely selected ratio. Of these non-hydroxy group-containing (meth)acrylic acid alkyl ester monomers, butyl (meth)acrylate, methyl (meth)acrylate, and ethyl (meth)acrylate are preferable, butyl (meth)acrylate and ethyl (meth)acrylate are more preferable, and butyl (meth)acrylate is most preferable.

The proportional content of the non-hydroxy group-containing (meth)acrylic acid alkyl ester monomer unit in the polymer X when all monomer units (all repeating units) included in the polymer X are taken to be 100 mass% is preferably 10.0 mass% or more, more preferably 12.5 mass% or more, and even more preferably 15.0 mass% or more, and is preferably 40.0 mass% or less, more preferably 37.5 mass% or less, and even more preferably 35.0 mass% or less. When the proportional content of the non-hydroxy group-containing (meth)acrylic acid alkyl ester monomer unit in the polymer X is not less than any of the lower limits set forth above, flexibility of an obtained electrode mixed material layer can be even further increased. Moreover, when the proportional content of the non-hydroxy group-containing (meth)acrylic acid alkyl ester monomer unit in the polymer X is not more than any of the upper limits set forth above, excessive swelling in electrolyte solution of the polymer X can be effectively suppressed, and cycle characteristics of a secondary battery can be enhanced.

### [Other monomer units]

The polymer X may further include monomer units other than the various monomer units and structural units described above (hereinafter, referred to as "other monomer units") as repeating units.

The proportional content of other monomer units in the polymer X when all repeating units (total of structural units and monomer units) in the polymer are taken to be 100 mass% is preferably 5 mass% or less, more preferably 4 mass% or less, even more preferably 3 mass% or less, further preferably 2 mass% or less, and even further preferably 1 mass% or less. It may of course be the case that the proportional content of other monomer units in the polymer X is 0 mass% (i.e., that the polymer X does not include other monomer units besides those described above). When the proportional content of other monomer units in the polymer is not more than any of the upper limits set forth above, dispersibility of a slurry composition and flexibility of an electrode mixed material layer can be even further increased.

Examples of monomers that can form other monomer units include, but are not specifically limited to, nitrile group-containing monomers, aromatic vinyl monomers, and so forth. Note that one of these monomers can be used individually, or two or more of these monomers can be used in combination.

### <Production method of polymer>

No specific limitations are placed on the method by which the above-described polymer is produced, and the method may, for example, be solution polymerization, suspension polymerization, bulk polymerization, or emulsion polymerization.

Moreover, the polymerization method may be addition polymerization such as ionic polymerization, radical polymerization, or living radical polymerization. Furthermore, a known polymerization initiator may be used as a polymerization initiator.

A molecular weight modifier that includes a sulfur-containing group such as a mercapto group is preferably used in the polymerization. Examples of compounds including a mercapto group that may be used as a molecular weight modifier include mercapto group-containing compounds having a carbon number of 8 to 12 such as octyl mercaptan, 2,2,4,6,6-pentamethyl-4-heptanethiol, 2,4,4,6,6-pentamethyl-2-heptanethiol, 2,3,4,6,6-pentamethyl-2-heptanethiol, 2,3,4,6,6-pentamethyl-3-heptanethiol, t-dodecyl mercaptan, and n-dodecyl mercaptan; and mercapto group-containing compounds such as 2,2,4,6,6-pentamethyl-4-octanethiol, 2,2,4,6,6,8,8-heptamethyl-4-nonanethiol, bis(2-mercaptoethyl) sulfide, methyl 3-mercaptopropionate, and 1-butanethiol. Of these compounds, mercapto group-containing compounds having a carbon number of 8 to 12 are preferable, and t-dodecyl mercaptan is more preferable.

Note that in a case in which the polymer X is produced by the previously described method (1), a pre-hydrogenation polymer (i.e., a polymer precursor) that is obtained after emulsion polymerization is subjected to hydrogenation. The hydrogenation can be carried out by a known hydrogenation method such as an oil-layer hydrogenation method or a waterlayer hydrogenation method. The catalyst used in the hydrogenation may be any selective hydrogenation catalyst that is commonly known such as a palladium-based catalyst or a rhodium-based catalyst. Two or more of such catalysts may be used together.

### <Properties of polymer X>

### [Weight-average molecular weight]

The weight-average molecular weight of the polymer X is preferably 10,000 or more, more preferably 15,000 or more, and even more preferably 20,000 or more, and is preferably 1,000,000 or less, more preferably 800,000 or less, and even more preferably 600,000 or less. When the weight-average molecular weight is not less than any of the lower limits set forth above, close adherence to a current collector of an obtained electrode mixed material layer can be increased. On the other hand, when the weight-average molecular weight of the polymer X is not more than any of the upper limits set forth above, dispersibility of a slurry composition can be increased. The average molecular weight of the polymer X can be controlled through adjustment of the amount of a molecular weight modifier that is compounded in polymerization, for example.

### [Molecular weight distribution]

The molecular weight distribution of the polymer X is preferably 1.5 or more, more preferably 1.8 or more, and even more preferably 2.2 or more, and is preferably 10 or less, more preferably 7 or less, and even more preferably 4 or less. When the molecular weight distribution is within any of the ranges set forth above, dispersibility of an obtained slurry composition can be even further increased, and output characteristics and cycle characteristics of an obtained secondary battery can be even further enhanced. Note that the molecular weight distribution of the polymer X can be calculated according to a method subsequently described in the EXAMPLES section.

### <Solvent>

The binder composition may further contain an organic solvent as a solvent other than water. The organic solvent may be N-methylpyrrolidone (NMP), N,N-dimethylformamide, acetone, or the like, for example.

### <Other components>

The presently disclosed binder composition for a non-aqueous secondary battery electrode may, besides the components described above, contain other components such as a reinforcing material, a leveling agent, a viscosity modifier, and an additive for electrolyte solution. These other components are not specifically limited so long as they do not affect battery reactions and may be selected from commonly known components such as those described in WO2012/115096A1. One of these components may be used individually, or two or more of these components may be used in combination in a freely selected ratio.

### <Production method of binder composition for non-aqueous secondary battery electrode>

The presently disclosed binder composition can be produced by mixing the polymer X and other components in a solvent such as water by a known method, for example.

For example, an aqueous solution or a water dispersion of the polymer X that has been obtained by the production method of the polymer X described above can be used in that form as the presently disclosed binder composition.

Moreover, the polymer X and an electrode active material may be mixed, and then other components such as a particulate polymer Y that are optionally used may be added, for example, to thereby simultaneously implement production of the binder composition and production of a subsequently described slurry composition.

### (Slurry composition for non-aqueous secondary battery electrode)

A feature of the presently disclosed slurry composition for a non-aqueous secondary battery electrode is that it contains an electrode active material and the presently disclosed binder composition for a non-aqueous secondary battery electrode set forth above. The presently disclosed slurry composition has excellent dispersibility and can form an electrode mixed material layer having excellent flexibility as a result of containing the presently disclosed binder composition set forth above. The presently disclosed slurry composition may optionally further contain a particulate polymer Y, a conductive material, and other components in addition to the electrode active material and the binder composition.

The presently disclosed slurry composition may be a slurry composition for a non-aqueous secondary battery positive electrode that contains a positive electrode active material as the electrode active material or may be a slurry composition for a non-aqueous secondary battery negative electrode that contains a negative electrode active material as the electrode active material. Since flexibility can particularly be an issue in a positive electrode mixed material layer, it is preferable for the presently disclosed slurry composition to be a slurry composition for a non-aqueous secondary battery positive electrode from a viewpoint of further improving flexibility of a positive electrode mixed material layer as a formed electrode mixed material layer.

Although the following provides a detailed description of a case in which the presently disclosed slurry composition for a non-aqueous secondary battery electrode is a slurry composition for a lithium ion secondary battery positive electrode, the presently disclosed slurry composition for a non-aqueous secondary battery electrode is not limited to the following example.

### <Electrode active material (positive electrode active material)>

A known positive electrode active material can be used without any specific limitations as a positive electrode active material of a lithium ion secondary battery. Specifically, a transition metal-containing compound such as a transition metal oxide, a transition metal sulfide, or a complex metal oxide of lithium and a transition metal can be used as the positive electrode active material. Examples of the transition metal include Ti, V, Cr, Mn, Fe, Co, Ni, Cu, and Mo.

Examples of the transition metal oxide include MnO, MnO₂, V₂O₅, V₆O₁₃, TiO₂, Cu₂V₂O₃, amorphous V₂O-P₂O₅, amorphous MoO₃, amorphous V₂O₅, and amorphous V₆O₁₃.

Examples of the transition metal sulfide include TiS₂, TiS₃, amorphous MoS₂, and FeS.

Examples of the complex metal oxide of lithium and a transition metal include a lithium-containing complex metal oxide having a layered structure, a lithium-containing complex metal oxide having a spinel structure, and a lithium-containing complex metal oxide having an olivine structure. In particular, it is preferable that the electrode active material includes a lithium-containing complex metal oxide having an olivine structure. When the electrode active material includes a lithium-containing complex metal oxide having an olivine structure, stability against overcharging of a secondary battery can be improved.

The lithium-containing complex metal oxide having an olivine structure may be an olivine-type lithium phosphate compound represented by Li_{y}MdPO₄, such as olivine-type lithium iron phosphate (LiFePO₄), olivine-type lithium manganese phosphate (LiMnPO₄), or olivine-type lithium manganese iron phosphate (LiMn₁₋ₓFeₓPO₄; 0 < x < 1), where Md represents one or more types of transition metals having an average oxidation state of 3+, examples of which include Mn, Fe, and Co, and y represents a number satisfying 0 ≤ y ≤ 2. Md of the olivine-type lithium phosphate compound represented by the formula Li_{y}MdPO₄ may be partly substituted with another metal. Examples of possible substituting metals include Cu, Mg, Zn, V, Ca, Sr, Ba, Ti, Al, Si, B, and Mo. Carbon coating layer-covered olivine-type lithium iron phosphate particles where the surfaces of olivine-type lithium iron phosphate particles are at least partially covered by a carbon coating layer can also be used as the olivine-type lithium iron phosphate.

Note that although the particle diameter of the positive electrode active material can be adjusted as appropriate within a range that yields the desired effects according to the present disclosure without any specific limitations, the average particle diameter of the positive electrode active material is preferably 2 µm or less, for example. The average particle diameter of the positive electrode active material referred to in the present disclosure means the particle diameter D50 at which, in a particle size distribution (by volume) measured by a laser diffraction particle size analyzer produced by Malvern Panalytical Ltd., cumulative volume calculated from a small diameter end of the distribution reaches 50%.

The proportional content of the electrode active material in the slurry composition is preferably not less than 90 mass% and not more than 99 mass% when all solid content contained in the slurry composition is taken to be 100 mass%, for example. When the proportional content of the electrode active material in the slurry composition is not less than the lower limit set forth above, energy density of a secondary battery can be improved. On the other hand, when the proportional content of the electrode active material in the slurry composition is not more than the upper limit set forth above, sufficiently high dispersibility of the slurry composition and close adherence to a current collector and flexibility of an electrode mixed material layer can be ensured.

### <Binder composition>

The presently disclosed binder composition set forth above can be used as the binder composition.

The additive amount of the binder composition in production of the slurry composition can be adjusted as appropriate within a range that yields the desired effects according to the present disclosure. For example, the additive amount of the binder composition can be adjusted such that when all solid content contained in the slurry composition is taken to be 100 mass%, the proportional content of the polymer X is not less than 0.1 mass% and not more than 5 mass%, preferably not less than 0.1 mass% and not more than 3 mass%, and more preferably not less than 0.1 mass% and not more than 2 mass%. When the proportional content of the polymer X in the slurry composition is not less than the lower limit set forth above, dispersibility of the slurry composition and close adherence to a current collector and flexibility of an electrode mixed material layer can be further improved. On the other hand, when the proportional content of the polymer X in the slurry composition is not more than any of the upper limits set forth above, internal resistance of a secondary battery can be reduced, and output characteristics of the secondary battery can be enhanced. Note that the slurry composition optionally contains a particulate polymer Y with the polymer X and that the total content of the polymer X and the particulate polymer Y that is an optional component in the slurry composition satisfies any of the same preferred content ranges as described above. Specifically, the total content is preferably 0.1 mass% or more, and is preferably 5 mass% or less, more preferably 3 mass% or less, and even more preferably 2 mass% or less.

### <Conductive material>

The conductive material is a component having a function of contributing to electrical contact among the electrode active material in an electrode mixed material layer.

It is preferable that either or both of carbon nanotubes and a particulate conductive material are used as the conductive material, and more preferable that carbon nanotubes and a particulate conductive material are used together as the conductive material.

When either or both of carbon nanotubes and a particulate conductive material are used as the conductive material, output characteristics of a secondary battery can be improved. Moreover, when carbon nanotubes and a particulate conductive material are used together as the conductive material, output characteristics of a secondary battery can be even further improved.

Note that conductive materials other than the carbon nanotubes and the particulate conductive material (i.e., other conductive materials) may be used as the conductive material. For example, fibrous conductive materials other than carbon nanotubes can be used as other conductive materials.

### <<Carbon nanotubes>>

Carbon nanotubes can improve output characteristics of a secondary battery by forming electrical conduction paths in an electrode mixed material layer. Moreover, by using carbon nanotubes, it is also possible to improve cycle characteristics and low-temperature characteristics of a secondary battery.

Any carbon nanotubes (hereinafter, also abbreviated as "CNTs") that yield the desired effects according to the present disclosure can be used as the carbon nanotubes without any specific limitations. Carbon nanotubes may be single-walled (SW) carbon nanotubes or multi-walled (MW) carbon nanotubes depending on the wall format thereof. Moreover, the carbon nanotubes that can be used as the conductive material may be single-walled carbon nanotubes, multi-walled carbon nanotubes, or a combination thereof.

The average number of walls of the CNTs is preferably 10 or less, more preferably 9 or less, even more preferably 8 or less, further preferably 2 or less, and even further preferably 1.5 or less. When the average number of walls of the CNTs is not more than any of the upper limits set forth above, cycle characteristics of a secondary battery can be further improved.

Note that the lower limit for the average number of walls of the CNTs is not specifically limited but is normally 1 or more.

The average diameter of the CNTs is preferably 0.5 nm or more, more preferably 1 nm or more, even more preferably 1.5 nm or more, further preferably 2 nm or more, and even further preferably 2.5 nm or more, and is preferably 20 nm or less, more preferably 12 nm or less, even more preferably 8 nm or less, further preferably 6 nm or less, and even further preferably 4 nm or less. When the average diameter of the CNTs is not less than any of the lower limits set forth above, aggregation of the CNTs can be sufficiently inhibited, and dispersibility of the CNTs as the conductive material can be increased. On the other hand, when the average diameter of the CNTs is not more than any of the upper limits set forth above, the CNTs form good electrical conduction paths in an electrode mixed material layer, even further enhance output characteristics of a secondary battery, and can also even further improve cycle characteristics of the secondary battery.

A ratio (G/D ratio) of G band peak intensity relative to D band peak intensity in a Raman spectrum of the CNTs is preferably 0.6 or more, more preferably 1.2 or more, even more preferably 2.1 or more, further preferably 3.0 or more, and even further preferably 3.6 or more. When the G/D ratio of the CNTs is not less than any of the lower limits set forth above, cycle characteristics of a secondary battery can be further improved. Note that the upper limit for the G/D ratio of the CNTs is not specifically limited, but may be 200 or less, for example.

The BET specific surface area of the CNTs is preferably 100 m²/g or more, more preferably 200 m²/g or more, and even more preferably 250 m²/g or more, and is preferably 1,200 m²/g or less, more preferably 1,100 m²/g or less, and even more preferably 1,000 m²/g or less. When the BET specific surface area of the CNTs is within any of the specific ranges set forth above, output characteristics of a secondary battery can be even further enhanced. Note that the "BET specific surface area" of CNTs referred to in the present disclosure is the nitrogen adsorption specific surface area measured by the BET method.

### [Production method of carbon nanotubes]

CNTs having the properties set forth above can be produced by a known technique such as arc discharge, laser ablation, or the super growth method without any specific limitations.

### [Proportional content in slurry composition]

Although the proportional content of the CNTs in the slurry composition can be adjusted as appropriate within a range that yields the desired effects according to the present disclosure, it is preferable that the proportional content of the CNTs is set as not less than 0.01 mass% and not more than 0.5 mass% when all solid content contained in the slurry composition is taken to be 100 mass%, for example. When the proportional content of the CNTs in the slurry composition is not less than the lower limit set forth above, internal resistance of a secondary battery can be effectively reduced, and output characteristics of the secondary battery can be even further enhanced. On the other hand, when the proportional content of the CNTs in the slurry composition is not more than the upper limit set forth above, flexibility of an electrode mixed material layer can be increased.

### <<Particulate conductive material>>

The particulate conductive material is a component that can function as a conductive material in an electrode mixed material layer and that can improve flexibility of the electrode mixed material layer.

The particulate conductive material may be carbon black (for example, acetylene black, Ketjenblack^{®} (Ketjenblack is a registered trademark in Japan, other countries, or both), or furnace black), graphene, or the like without any specific limitations so long as it is a conductive material having a form other than a fibrous form (for example, a spherical or plate-like form). Note that one of these particulate conductive materials may be used individually, or two or more of these particulate conductive materials may be used in combination in a freely selected ratio.

### [Proportional content in slurry composition]

Although the proportional content of the particulate conductive material in the slurry composition can be adjusted as appropriate within a range that yields the desired effects according to the present disclosure, it is preferable that the proportional content of the particulate conductive material is set as not less than 0.1 mass% and not more than 5 mass% when all solid content contained in the slurry composition is taken to be 100 mass%, for example. When the proportional content of the particulate conductive material in the slurry composition is not less than the lower limit set forth above, flexibility of an electrode mixed material layer can be further improved. On the other hand, when the proportional content of the particulate conductive material in the slurry composition is not more than the upper limit set forth above, close adherence to a current collector of an electrode mixed material layer can be increased.

### <<Mixing ratio of CNTs and particulate conductive material>>

Although no specific limitations are placed on the mixing ratio of the CNTs and the particulate conductive material, the proportion constituted by the content of the CNTs among the total content of the CNTs and the particulate conductive material in the slurry composition, for example, is preferably 1 mass% or more, more preferably 2 mass% or more, and even more preferably 3 mass% or more, and is preferably 30 mass% or less, and more preferably 25 mass% or less. When the proportion constituted by the content of the CNTs among the total content of the CNTs and the particulate conductive material is not less than any of the lower limits set forth above, internal resistance of a secondary battery can be effectively reduced, and output characteristics of the secondary battery can be even further enhanced. On the other hand, when the proportion constituted by the content of the CNTs among the total content of the CNTs and the particulate conductive material is not more than any of the upper limits set forth above, flexibility of an electrode mixed material layer can be improved.

### <Particulate polymer Y including hydrophilic group>

A particulate polymer Y including a hydrophilic group is a component that can function as a binder in conjunction with the above-described polymer X in an electrode mixed material layer. Note that the particulate polymer Y is considered to be a different polymer from the polymer X described above. The particulate polymer Y is normally water-insoluble. Note that when a polymer is said to be "water-insoluble" in the present specification, this means that when 0.5 g (in terms of solid content) of the polymer is dissolved in 100 g of water at a temperature of 25°C, the amount of insoluble content is 90 mass% or more. The particulate polymer Y can further improve dispersibility of the slurry composition and close adherence to a current collector and flexibility of a formed electrode mixed material layer as a result of including a hydrophilic group.

No specific limitations are placed on the method by which a hydrophilic group is introduced into the particulate polymer Y. For example, a method in which a hydrophilic group-containing monomer is used in production of the particulate polymer Y so as to form a hydrophilic group-containing monomer unit in the resultant particulate polymer Y can be adopted.

### <<Hydrophilic group-containing monomer unit>>

Examples of hydrophilic group-containing monomers that can form the hydrophilic group-containing monomer unit in the particulate polymer Y include the various monomers that were described as acidic group-containing monomers that can be used to introduce an acidic group-containing monomer unit into the polymer X and also hydroxy group-containing monomers.

Any of the various acidic group-containing monomers that can be used in production of the previously described polymer X can be used as an acidic group-containing monomer (carboxy group-containing monomer, sulfo group-containing monomer, phosphate group-containing monomer, etc.). One of these acidic group-containing monomers may be used individually, or two or more of these acidic group-containing monomers may be used together in a freely selected ratio.

Examples of hydroxy group-containing monomers that can be used include the various compounds that were described as monomers that can be used to introduce a hydroxy group-containing (meth)acrylic acid ester monomer unit into the polymer X and also other hydroxy group-containing monomers that are listed below.

Examples of other hydroxy group-containing monomers include mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether. Note that in the present disclosure, "(meth)allyl" is used to indicate "allyl" and/or "methallyl", and "(meth)acryloyl" is used to indicate "acryloyl" and/or "methacryloyl".

Moreover, it is preferable to use an acidic group-containing monomer (carboxy group-containing monomer, sulfo group-containing monomer, phosphate group-containing monomer, etc.) as a hydrophilic group-containing monomer from a viewpoint of even further improving dispersibility of the slurry composition and close adherence to a current collector of a formed electrode mixed material layer, and it is more preferable to use an acidic group-containing monomer and a hydroxy group-containing monomer together, and even more preferable to use a carboxy group-containing monomer and a hydroxy group-containing monomer together as hydrophilic group-containing monomers from a viewpoint of even further improving close adherence of a formed electrode mixed material layer.

### -Proportional content-

The proportional content of the hydrophilic group-containing monomer unit in the particulate polymer Y when all monomer units included in the particulate polymer Y are taken to be 100 mass% is preferably 10 mass% or less. When the proportional content of the hydrophilic group-containing monomer unit in the particulate polymer Y is within the specific range set forth above, dispersibility of the slurry composition and close adherence to a current collector and flexibility of a formed electrode mixed material layer can be even further improved.

In a case in which the particulate polymer Y includes both an acidic group-containing monomer unit (carboxy group-containing monomer unit, sulfo group-containing monomer unit, phosphate group-containing monomer unit, etc.) and a hydroxy group-containing monomer unit together as the hydrophilic group-containing monomer unit, the proportional content of the hydrophilic group-containing monomer unit (i.e., the total proportional content of the acidic group-containing monomer unit and the hydroxy group-containing monomer unit) in the particulate polymer Y when all monomer units included in the particulate polymer Y are taken to be 100 mass% is more preferably 2 mass% or more, and even more preferably 3 mass% or more, and is more preferably 5 mass% or less, and even more preferably 4 mass% or less. When the total proportional content of the acidic group-containing monomer unit and the hydroxy group-containing monomer unit in the particulate polymer Y is within any of the specific ranges set forth above, dispersibility of the slurry composition and close adherence to a current collector and flexibility of a formed electrode mixed material layer can be even further improved.

In a case in which the particulate polymer Y includes an acidic group-containing monomer unit (carboxy group-containing monomer unit, sulfo group-containing monomer unit, phosphate group-containing monomer unit, etc.) as the hydrophilic group-containing monomer unit, the proportional content of the acidic group-containing monomer unit in the particulate polymer Y when all monomer units included in the particulate polymer Y are taken to be 100 mass% is preferably 0.5 mass% or more, more preferably 1 mass% or more, and even more preferably 1.5 mass% or more, and is preferably 5 mass% or less, more preferably 3 mass% or less, and even more preferably 2.5 mass% or less. When the proportional content of the acidic group-containing monomer unit in the particulate polymer Y is not less than any of the lower limits set forth above, dispersibility of the slurry composition and close adherence to a current collector of a formed electrode mixed material layer can be even further improved. On the other hand, when the proportional content of the acidic group-containing monomer unit in the particulate polymer Y is not more than any of the upper limits set forth above, sufficiently high flexibility of a formed electrode mixed material layer can be ensured.

In a case in which the particulate polymer Y includes a hydroxy group-containing monomer unit as the hydrophilic group-containing monomer unit, the proportional content of the hydroxy group-containing monomer unit in the particulate polymer Y when all monomer units included in the particulate polymer Y are taken to be 100 mass% is preferably 0.5 mass% or more, and more preferably 1 mass% or more, and is preferably 5 mass% or less, more preferably 2 mass% or less, and even more preferably 1.5 mass% or less. When the proportional content of the hydroxy group-containing monomer unit in the particulate polymer Y is not less than any of the lower limits set forth above, flexibility of a formed electrode mixed material layer can be even further improved. On the other hand, when the proportional content of the hydroxy group-containing monomer unit in the particulate polymer Y is not more than any of the upper limits set forth above, sufficiently high dispersibility of the slurry composition and close adherence to a current collector of a formed electrode mixed material layer can be ensured.

### <<Type of particulate polymer Y>>

It is preferable to use a hydrophilic group-containing acrylic polymer or a hydrophilic group-containing conjugated diene polymer, for example, as the particulate polymer Y including a hydrophilic group.

### -Hydrophilic group-containing acrylic polymer-

The hydrophilic group-containing acrylic polymer is a copolymer that includes at least a (meth)acrylic acid ester monomer unit in addition to the hydrophilic group-containing monomer unit described above. The hydrophilic group-containing acrylic polymer preferably further includes an aromatic vinyl monomer unit. Moreover, the hydrophilic group-containing acrylic polymer may further include monomer units other than the hydrophilic group-containing monomer unit, the (meth)acrylic acid ester monomer unit, and the aromatic vinyl monomer unit.

Note that the proportional content of the hydrophilic group-containing monomer unit in the hydrophilic group-containing acrylic polymer can be set within any of the same ranges as the preferred ranges for the proportional content of the hydrophilic group-containing monomer unit in the polymer described above.

Examples of (meth)acrylic acid ester monomers that can form the (meth)acrylic acid ester monomer unit in the hydrophilic group-containing acrylic polymer include (meth)acrylic acid alkyl esters such as methyl acrylate, ethyl acrylate, butyl acrylate, methyl methacrylate, ethyl methacrylate, and 2-ethylhexyl acrylate. Note that one of these (meth)acrylic acid ester monomers may be used individually, or two or more of these (meth)acrylic acid ester monomers may be used in a freely selected ratio.

Also note that in the present specification, "(meth)acryl" is used to indicate "acryl" and/or "methacryl".

The proportional content of the (meth)acrylic acid ester monomer unit in the hydrophilic group-containing acrylic polymer when all monomer units included in the hydrophilic group-containing acrylic polymer are taken to be 100 mass% is preferably 50 mass% or more, more preferably 60 mass% or more, and even more preferably 70 mass% or more, and is preferably 90 mass% or less, more preferably 85 mass% or less, and even more preferably 80 mass% or less. When the proportional content of the (meth)acrylic acid ester monomer unit in the hydrophilic group-containing acrylic polymer is within any of the specific ranges set forth above, close adherence to a current collector and flexibility of a formed electrode mixed material layer can be even further improved.

Any of the aromatic vinyl monomers described below in the subsequent "Hydrophilic group-containing conjugated diene polymer" section can be used as an aromatic vinyl monomer that can form the aromatic vinyl monomer unit in the hydrophilic group-containing acrylic polymer.

The proportional content of the aromatic vinyl monomer unit in the hydrophilic group-containing acrylic polymer when all monomer units included in the hydrophilic group-containing acrylic polymer are taken to be 100 mass% is preferably 5 mass% or more, more preferably 10 mass% or more, and even more preferably 17 mass% or more, and is preferably 40 mass% or less, more preferably 35 mass% or less, and even more preferably 25 mass% or less.

### -Hydrophilic group-containing conjugated diene polymer-

The hydrophilic group-containing conjugated diene polymer is a copolymer that includes a conjugated diene monomer unit in addition to the hydrophilic group-containing monomer unit described above.

Specific examples of the conjugated diene polymer include, but are not specifically limited to, a copolymer that includes a hydrophilic group-containing monomer unit, an aromatic vinyl monomer unit, and an aliphatic conjugated diene monomer unit such as a hydrophilic group-containing styrene-butadiene copolymer (hydrophilic group-containing SBR), hydrophilic group-containing butadiene rubber (hydrophilic group-containing BR) (copolymer including a hydrophilic group-containing monomer unit and a butadiene unit), hydrophilic group-containing acrylic rubber (hydrophilic group-containing NBR) (copolymer including a hydrophilic group-containing monomer unit, an acrylonitrile unit, and a butadiene unit), and hydrogenated products thereof. One of these conjugated diene polymers may be used individually, or two or more of these conjugated diene polymers may be used in a freely selected ratio.

In particular, it is preferable to use a copolymer that includes a hydrophilic group-containing monomer unit, an aromatic vinyl monomer unit, and an aliphatic conjugated diene monomer unit such as a hydrophilic group-containing styrene-butadiene copolymer (hydrophilic group-containing SBR) from a viewpoint of even further improving close adherence to a current collector and flexibility of a formed electrode mixed material layer.

The proportional content of the hydrophilic group-containing monomer unit in the hydrophilic group-containing conjugated diene polymer can be set within any of the same ranges as the preferred ranges for the proportional content of the hydrophilic group-containing monomer unit in the polymer described above.

Examples of conjugated diene monomers that can form the conjugated diene monomer unit in the hydrophilic group-containing conjugated diene polymer include the various compounds that were listed above as compounds that can be used to introduce a conjugated diene monomer unit into the polymer X. One of these conjugated diene monomers may be used individually, or two or more of these conjugated diene monomers may be used in a freely selected ratio. Of these conjugated diene monomers, 1,3-butadiene is preferable.

The proportional content of the conjugated diene monomer unit in the hydrophilic group-containing conjugated diene polymer when all monomer units included in the hydrophilic group-containing conjugated diene polymer are taken to be 100 mass% is preferably 15 mass% or more, more preferably 20 mass% or more, and even more preferably 25 mass% or more, and is preferably 60 mass% or less, more preferably 50 mass% or less, and even more preferably 40 mass% or less. When the proportional content of the conjugated diene monomer unit in the hydrophilic group-containing conjugated diene polymer is within any of the specific ranges set forth above, close adherence to a current collector and flexibility of a formed electrode mixed material layer can be yet further improved.

Examples of aromatic vinyl monomers that can form the aromatic vinyl monomer unit in the hydrophilic group-containing conjugated diene polymer include styrene, α-methylstyrene, vinyltoluene, and divinylbenzene. One of these aromatic vinyl monomers may be used individually, or two or more of these aromatic vinyl monomers may be used a freely selected ratio. Of these aromatic vinyl monomers, styrene is preferable.

The proportional content of the aromatic vinyl monomer unit in the hydrophilic group-containing conjugated diene polymer when all monomer units included in the hydrophilic group-containing conjugated diene polymer are taken to be 100 mass% is preferably 30 mass% or more, more preferably 45 mass% or more, and even more preferably 56 mass% or more, and is preferably 80 mass% or less, more preferably 75 mass% or less, and even more preferably 71 mass% or less. When the proportional content of the aromatic vinyl monomer unit in the hydrophilic group-containing conjugated diene polymer is within any of the specific ranges set forth above, close adherence to a current collector and flexibility of a formed electrode mixed material layer can be yet further improved.

### <<Production method of particulate polymer Y>>

No specific limitations are placed on the method by which the particulate polymer Y is polymerized. For example, a method such as solution polymerization, suspension polymerization, bulk polymerization, or emulsion polymerization may be adopted. Moreover, addition polymerization such as ionic polymerization, radical polymerization, or living radical polymerization can be adopted as the polymerization reaction. The polymerization may be carried out with a commonly used emulsifier, dispersant, polymerization initiator, chain transfer agent, or the like, and the amount thereof may also be the same as commonly used.

### <<Proportional content in slurry composition>>

Although the proportional content of the particulate polymer Y in the slurry composition can be adjusted as appropriate within a range that yields the desired effects according to the present disclosure, the proportional content of the particulate polymer Y when all solid content contained in the slurry composition is taken to be 100 mass%, for example, is preferably 5 mass% or less, more preferably 3 mass% or less, and even more preferably 1.5 mass% or less, may be 0 mass%, and is preferably 0.1 mass% or more, and more preferably 0.5 mass% or more. In a case in which the slurry composition contains the particulate polymer Y, close adherence to a current collector of an electrode mixed material layer can be even further improved through the proportional content of the particulate polymer Y in the slurry composition being not less than any of the lower limits set forth above. On the other hand, internal resistance of a secondary battery can be reduced and output characteristics of the secondary battery can be even further improved through the proportional content of the polymer Y in the slurry composition being not more than any of the upper limits set forth above.

### <Dispersion medium>

Water and organic solvents that were mentioned in the preceding "Solvent" section can be used as the dispersion medium. The amount of the dispersion medium can be determined such that the solid content concentration of a conductive material dispersion liquid is not less than 0.1 mass% and not more than 30 mass%, for example.

### <Other components>

Examples of other components that may be contained in the slurry composition include, but are not specifically limited to, the same other components as may be contained in the presently disclosed binder composition. One other component may be used individually, or two or more other components may be used in combination in a freely selected ratio.

### <Production method of slurry composition>

The slurry composition set forth above can be produced by dissolving or dispersing the above-described components in the dispersion medium. For example, it is preferable for the presently disclosed slurry composition to be produced by performing a step of adding the positive electrode active material, the solvent, optional components, and so forth to the binder composition set forth above and performing mixing by a known method such as previously described. Moreover, particularly in a case in which CNTs are compounded as the conductive material, it is preferable to perform a multistage mixing step in which the CNTs, a dispersant such as carboxymethyl cellulose, and the dispersion medium are mixed to produce a CNT dispersion liquid and then the positive electrode active material, etc. are further mixed therewith.

### (Electrode for non-aqueous secondary battery)

The presently disclosed electrode includes an electrode mixed material layer formed using the presently disclosed slurry composition set forth above and normally has a structure in which the electrode mixed material layer is formed on a current collector. Consequently, the electrode mixed material layer contains at least the electrode active material and the polymer X, and optionally further contains the particulate polymer Y, the conductive material, and so forth.

Components such as the electrode active material, the polymer X, the particulate polymer Y, and the conductive material that are contained in the electrode mixed material layer are components that were contained in the slurry composition set forth above, and the preferred proportional content of each of these components is the same as the preferred proportional content of each of these components when all solid content contained in the slurry composition is taken to be 100 mass%.

The presently disclosed electrode may further include a conductive adhesive layer containing at least a conductive material and an adhesive between the current collector and the electrode mixed material layer.

The electrode mixed material layer that is included in the presently disclosed electrode has excellent flexibility and can cause a secondary battery to display excellent battery characteristics as a result of being formed using the presently disclosed slurry composition. In more detail, the electrode mixed material layer that is included in the presently disclosed electrode has a uniform structure as a result of being formed using the presently disclosed slurry composition that has excellent dispersibility. In addition, the electrode mixed material layer that is included in the presently disclosed electrode has excellent flexibility as described above, which makes it possible to inhibit the occurrence of cracking when the electrode is subjected to rolling, folding, or the like according to the shape of a secondary battery during secondary battery production, for example. Consequently, the presently disclosed electrode can reduce internal resistance of a secondary battery as a result of including an electrode mixed material layer that has a uniform structure and little cracking.

### <Current collector>

A material having electrical conductivity and electrochemical durability is used as the current collector. Specifically, the current collector may, for example, be made of a metal material such as iron, copper, aluminum, nickel, stainless steel, titanium, tantalum, gold, or platinum. Note that one of these materials may be used individually, or two or more of these materials may be used in combination in a freely selected ratio.

In a case in which an electrode that further includes the aforementioned conductive adhesive layer between the electrode mixed material layer and the current collector is to be produced, for example, a conductive adhesive layer-equipped current collector having a conductive adhesive layer formed on a current collector substrate can be used as the current collector.

The current collector substrate may be a current collector formed of a metal material such as previously described, for example.

No specific limitations are placed on the method by which the conductive adhesive layer is formed on the current collector substrate. For example, the conductive adhesive layer can be formed through application and subsequent drying, on the current collector substrate, of a slurry composition (also referred to as a "conductive adhesive") that contains at least a conductive material and an adhesive dispersed or dissolved in a dispersion medium or solvent such as water and that optionally further contains a dispersant dispersed or dissolved in the dispersion medium or solvent.

The conductive material is not specifically limited, and any of the previously described conductive materials that can be contained in the slurry composition can be used, for example. The adhesive is also not specifically limited, and the previously described particulate polymer Y that can be contained in the slurry composition can be used. The dispersant is also not specifically limited, and a known dispersant such as carboxymethyl cellulose or a salt thereof, for example, can be used.

Moreover, known methods can be adopted without any specific limitations as the method by which the conductive adhesive is applied onto the current collector substrate and the method by which the applied conductive adhesive is dried.

### <Electrode mixed material layer>

The electrode mixed material layer is formed, for example, through a step of applying the slurry composition onto the current collector (application step) and a step of drying the slurry composition that has been applied onto the current collector (drying step).

### <<Application step>>

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of a slurry composition film on the current collector after application but before drying can be set as appropriate in accordance with the thickness of the electrode mixed material layer to be obtained after drying.

### <<Drying step>>

The slurry composition that has been applied onto the current collector can be dried by any commonly known method without any specific limitations. Examples of drying methods that can be used include drying by warm, hot, or low-humidity air; drying in a vacuum; and drying by irradiation with infrared light, an electron beam, or the like. By drying the slurry composition that has been applied onto the current collector in this manner, an electrode mixed material layer can be formed on the current collector, and an electrode including the current collector and the electrode mixed material layer can be obtained.

After the drying step, the electrode mixed material layer may be further subjected to a pressing process, such as mold pressing or roll pressing. This pressing process can improve peel strength of the electrode.

### (Non-aqueous secondary battery)

The presently disclosed secondary battery includes the presently disclosed electrode set forth above. For example, the presently disclosed secondary battery may include a positive electrode, a negative electrode, a separator, and an electrolyte solution, wherein at least one of the positive electrode and the negative electrode is the presently disclosed electrode set forth above. In other words, the presently disclosed secondary battery may be a secondary battery in which the positive electrode is the presently disclosed electrode and the negative electrode is a known negative electrode, a secondary battery in which the negative electrode is the presently disclosed electrode and the positive electrode is a known positive electrode, or a secondary battery in which the positive electrode and the negative electrode are both the presently disclosed electrode. Since flexibility can particularly be an issue in a positive electrode mixed material layer, it is preferable for at least the positive electrode in the presently disclosed secondary battery to be the presently disclosed electrode from a viewpoint of further improving flexibility of a positive electrode mixed material layer as an electrode mixed material layer.

As a result of including the presently disclosed electrode set forth above, the presently disclosed secondary battery has reduced internal resistance, excellent output characteristics, and excellent cycle characteristics.

Although the following describes, as one example, a case in which the non-aqueous secondary battery is a lithium ion secondary battery, the presently disclosed non-aqueous secondary battery is not limited to the following example.

### <Positive electrode>

The positive electrode is not specifically limited and can be the presently disclosed electrode set forth above. In other words, the positive electrode can be a positive electrode that includes a current collector and a positive electrode mixed material layer formed from the presently disclosed slurry composition, for example.

Moreover, in a case in which the presently disclosed electrode is not used as the positive electrode, a known positive electrode can be used as the positive electrode.

### <Negative electrode>

The negative electrode is not specifically limited and can be the presently disclosed electrode set forth above. In other words, the negative electrode can be a negative electrode that includes a current collector and a negative electrode mixed material layer formed from the presently disclosed slurry composition, for example.

Moreover, in a case in which the presently disclosed electrode is not used as the negative electrode, a known negative electrode can be used as the negative electrode.

### <Separator>

The separator is not specifically limited and may be a microporous membrane in which a polyolefinic (polyethylene, polypropylene, polybutene, or polyvinyl chloride) resin is used, a microporous membrane in which a resin such as polyethylene terephthalate, polycycloolefin, polyether sulfone, polyamide, polyimide, polyimide amide, polyaramid, polycycloolefin, nylon, or polytetrafluoroethylene is used, a woven or non-woven fabric in which polyolefinic fiber is used, an assembly of particles formed of an insulating substance, or the like, for example. Of these examples, a microporous membrane in which a polyolefinic (polyethylene, polypropylene, polybutene, or polyvinyl chloride) resin is used is preferable in terms that the total thickness of the separator can be reduced, which can thereby increase the ratio of an electrode mixed material layer in the secondary battery and increase the volumetric capacity.

### <Electrolyte solution>

An electrolyte solution that is obtained by dissolving an electrolyte in a solvent can be used as the electrolyte solution.

The solvent may be an organic solvent in which the electrolyte can dissolve. Specifically, examples of solvents that may suitably be used include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Moreover, a known additive such as vinylene carbonate (VC), fluoroethylene carbonate (FEC), or ethyl methyl sulfone, for example, may be added to the solvent.

The electrolyte may be a lithium salt. Examples of lithium salts that can be used include compounds described in JP2012-204303A. Of these lithium salts, LiPF₆, LiClO₄, and CF₃SO₃Li are preferred as electrolytes because they readily dissolve in organic solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The presently disclosed secondary battery can be produced by a known assembly method without any specific limitations. Specifically, the presently disclosed secondary battery can be produced by, for example, performing rolling, folding, or the like of the negative electrode, positive electrode, and separator obtained as described above in accordance with the battery shape, as necessary, to place these battery members inside of a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like, for example.

Note that battery members such as the positive electrode, the negative electrode, and the separator that are included in the secondary battery are typically arranged such that the positive electrode is in contact with one side of the separator and the negative electrode is in contact with the other side of the separator. More specifically, the positive electrode mixed material layer is arranged at one side of the separator and the negative electrode mixed material layer is arranged at the other side of the separator such that these electrode mixed material layers are in contact with the separator.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer. Furthermore, in the case of a hydrogenated polymer obtained through hydrogenation of a polymerized product that includes conjugated diene monomer units, the total proportional content of non-hydrogenated conjugated diene monomer units and alkylene structural units that are hydrogenated conjugated diene monomer units in the hydrogenated polymer is the same as the ratio (charging ratio) of a conjugated diene monomer among all monomers used in polymerization of the polymerized product.

Various measurements and evaluations in the examples and comparative examples were performed according to the following methods.

### <Weight-average molecular weight of polymer X>

The weight-average molecular weight (Mw) and number-average molecular weight (Mn) of a polymer X were measured by gel permeation chromatography (GPC) under the following measurement conditions using a LiBr-DMF solution of 10 mM in concentration as an eluent.
- Separation column: Shodex KD-806M (produced by Showa Denko K.K.)
- Detector: Differential refractometer RID-10A (produced by Shimadzu Corporation)
- Eluent flow rate: 0.3 mL/min
- Column temperature: 40°C
- Standard polymer: TSK standard polystyrene (produced by Tosoh Corporation)

A measurement sample was prepared as follows. First, the polymer X was added to 5 mL of the eluent indicated above such as to give a solid content concentration of 0.45 mass%, a stirring bar was placed therein, and 30 minutes of stirring was performed at 300 rpm using a magnetic stirrer at 25°C. The resultant solution was filtered using a 0.22 µm membrane filter to obtain a measurement sample.

The weight-average molecular weight (Mw) and number-average molecular weight (Mn) measured as described above were used to calculate a value of the molecular weight distribution (Mw/Mn).

### <Volume-average particle diameter D50 of particulate polymer>

For each particulate polymer produced in the examples and comparative examples, a laser diffraction particle size analyzer (produced by Beckman Coulter, Inc.; product name: LS-230) was used to measure a particle size distribution (by volume) of a water dispersion adjusted to a solid content concentration of 0.1 mass%, and the particle diameter (µm) at which cumulative volume calculated from a small diameter end of the distribution reached 50% was determined and was taken to be the volume-average particle diameter D50 of the particulate polymer.

### <Dispersibility of slurry composition>

The viscosity of a positive electrode slurry composition was measured by a Brookfield B-type viscometer (60 rpm, 25°C), which is a single-cylinder rotational viscometer in accordance with JIS Z8803:1991, and was evaluated by the following standard. A higher solid content concentration in the same viscosity range (1,000 mPa·s to 2,000 mPa·s) with the same type of slurry composition indicates better dispersion of solid content contained in the slurry composition.
A: Solid content concentration of 60% or more
B: Solid content concentration of not less than 58% and less than 60%
C: Solid content concentration of not less than 55% and less than 58%
D: Solid content concentration of less than 55% or not dispersed (no fluidity)

### <Close adherence to current collector of electrode mixed material layer>

A positive electrode produced in each example or comparative example was cut out as a rectangular shape of 1.0 cm in width by 10 cm in length to obtain a test specimen. Cellophane tape (tape prescribed by JIS Z1522) was affixed to the surface at the positive electrode mixed material layer-side of the test specimen, and then the stress when the cellophane tape was pulled and peeled off in a direction at 90° and at a speed of 50 mm/min from one end of the test specimen was measured. A total of three measurements were made in this manner. An average value of the measurements was determined, was taken to be the peel strength (N/m), and was evaluated by the following standard. A larger peel strength indicates that the positive electrode mixed material layer has better adhesiveness and that the positive electrode mixed material layer is closely adhered more strongly to the current collector.
A: Peel strength of 10 N/m or more
B: Peel strength of not less than 8.5 N/m and less than 10 N/m
C: Peel strength of not less than 7 N/m and less than 8.5 N/m
D: Peel strength of less than 7 N/m

### <Flexibility of electrode mixed material layer>

A cylindrical rod made of SUS was placed on a positive electrode mixed material layer-side of a positive electrode for a lithium ion secondary battery produced in each example or comparative example, the positive electrode was wound around the cylindrical rod, and the presence or absence of cracking of the positive electrode mixed material layer was visually evaluated. This was performed with cylindrical rods of different diameters (Ø5 cm, Ø7.5 cm, and Ø10.0 cm). A smaller diameter for the smallest SUS cylindrical rod diameter with which the positive electrode mixed material layer can be preserved without cracking when the positive electrode is wound around the SUS cylindrical rod indicates that the positive electrode mixed material layer has better flexibility.
A: No cracking with any of Ø5 cm, Ø7.5 cm, and Ø10.0 cm
B: Cracking with Ø5 cm, but no cracking with Ø7.5 cm and Ø10.0 cm
C: Cracking with Ø5 cm and Ø7.5 cm, but no cracking with Ø10.0 cm
D: Cracking with each of Ø5 cm, Ø7.5 cm, and Ø10.0 cm

### <Output characteristics>

A lithium ion secondary battery produced in each example or comparative example was left at rest at a temperature of 25°C for 5 hours after injection of electrolyte solution. Next, the lithium ion secondary battery was charged to an SOC (State Of Charge) of 20% by a 0.1C constant-current method at a temperature of 25°C and was then subjected to 12 hours of aging at a temperature of 60°C. The lithium ion secondary battery was then discharged to a cell voltage of 2.6 V by a 0.2C constant-current method at a temperature of 25°C. Thereafter, CC-CV charging (upper limit cell voltage: 3.6 V) was performed with a 0.2C constant current, and then CC discharging was performed to a cell voltage of 2.6 V with a 0.2C constant current. This charging and discharging at 0.2C was repeated three times. The discharge capacity in the 3^{rd} cycle at 0.2C was taken to be the initial capacity CX. Thereafter, CC-CV charging (upper limit cell voltage: 3.6 V) was performed with a 0.2C constant current, CC discharging was performed to a cell voltage of 2.6 V with a 2.0C constant current, and the discharge capacity at this time was taken to be CY. A 2.0C/0.2C discharge capacity maintenance rate expressed by (CY/CX) × 100(%) was determined and was evaluated by the following standard. A larger discharge capacity maintenance rate indicates that the lithium ion secondary battery has better output characteristics.
A+: 2.0C/0.2C discharge capacity maintenance rate of 75% or more
A: 2.0C/0.2C discharge capacity maintenance rate of not less than 60% and less than 75%
B: 2.0C/0.2C discharge capacity maintenance rate of not less than 55% and less than 60%
C: 2.0C/0.2C discharge capacity maintenance rate of not less than 50% and less than 55%
D: 2.0C/0.2C discharge capacity maintenance rate of less than 50%

### <Cycle characteristics>

A lithium ion secondary battery produced in each example or comparative example was left at rest at a temperature of 25°C for 5 hours after injection of electrolyte solution. Next, the lithium ion secondary battery was charged to an SOC (State Of Charge) of 20% by a 0.1C constant-current method at a temperature of 25°C and was then subjected to 12 hours of aging at a temperature of 60°C. The lithium ion secondary battery was then discharged to a cell voltage of 2.6 V by a 0.2C constant-current method at a temperature of 25°C. Thereafter, CC-CV charging (upper limit cell voltage: 3.6 V) was performed with a 0.2C constant current, and then CC discharging was performed to a cell voltage of 2.6 V with a 0.2C constant current. This charging and discharging at 0.2C was repeated three times.

Thereafter, a charge/discharge operation between cell voltages of 3.60 V and 2.60 V by CC-CV charging (upper limit cell voltage: 3.6 V) with a 0.2C constant current and by a discharge rate of 1.0C was performed for 100 cycles in an environment having a temperature of 45°C. The discharge capacity of the 1^{st} cycle was defined as X1, and the discharge capacity of the 100^{th} cycle was defined as X2. A capacity maintenance rate expressed by ΔC = (X2/X1) × 100(%) was determined using the discharge capacity X1 and the discharge capacity X2 and was evaluated by the following standard. A larger value for the capacity maintenance rate ΔC indicates that the lithium ion secondary battery has better cycle characteristics.
A: Capacity maintenance rate of 90% or more
B: Capacity maintenance rate of not less than 85% and less than 90%
C: Capacity maintenance rate of not less than 80% and less than 85%
D: Capacity maintenance rate of less than 80%

### (Example 1)

### <Production of polymer X (binder composition)>

A reactor was charged, in order, with 200 parts of deionized water, 8.5 parts of sodium dodecyl diphenyl ether sulfonate aqueous solution of 30% in concentration, 15 parts of 2-hydroxyethyl methacrylate as a hydroxy group-containing methacrylic acid ester monomer, 27 parts of methacrylic acid as an acidic group-containing monomer, 23 parts of butyl acrylate as a non-hydroxy group-containing (meth)acrylic acid ester monomer, and 0.45 parts of t-dodecyl mercaptan as a chain transfer agent. Next, gas inside of the reactor was purged three times with nitrogen, and then 35 parts of 1,3-butadiene as a conjugated diene monomer was charged. The reactor was held at 10°C while 0.06 parts of cumene hydroperoxide as a polymerization initiator, a reductant, and an appropriate amount of a chelating agent were charged and while a polymerization reaction was continued under stirring. At the point at which the polymerization conversion rate reached 85%, 0.1 parts of hydroquinone aqueous solution of 10% in concentration was added as a polymerization inhibitor to stop the polymerization reaction. Next, residual monomer was removed using an evaporator with a water temperature of 80°C to yield a water dispersion of a polymer precursor. This water dispersion was subsequently concentrated to a solid content concentration of 40% using an evaporator.

Next, the concentrated water dispersion of the polymer was adjusted to a pH of 8.5 and a solid content concentration of 8% through addition of 8.0% NaOH aqueous solution and deionized water to yield a polymer X. The polymer X was a water-soluble polymer according to the definition in the present specification. The weight-average molecular weight and molecular weight distribution of the obtained polymer X were determined as previously described. The results are shown in Table 1.

### <Production of particulate polymer Y>

A particulate polymer Y including a hydrophilic group (hydrophilic group-containing acrylic polymer) was produced according to the following procedure.

A 1 L septum-equipped flask (reactor) including a stirrer was charged with 90 parts of deionized water and 0.5 parts of sodium lauryl sulfate as an emulsifier. The gas phase was purged with nitrogen gas, the temperature was raised to 60°C, and then 0.3 parts of ammonium persulfate (APS) as a polymerization initiator was dissolved in 20.0 parts of deionized water and was added into the flask.

Meanwhile, a monomer composition was obtained in a separate vessel (emulsion vessel) by mixing 30 parts of deionized water, 0.5 parts of sodium lauryl sulfate as an emulsifier, 78.0 parts of butyl acrylate as a (meth)acrylic acid ester monomer, 2.5 parts of itaconic acid and 1.0 parts of 2-hydroxyethyl acrylate as hydrophilic group-containing monomers, and 18.5 parts of styrene as an aromatic vinyl monomer. The monomer composition was continuously added into the 1 L septum-equipped flask over 3 hours to perform polymerization. The reaction was carried out at 60°C during the addition. Once the addition was complete, a further 2 hours of stirring was performed at 80°C to yield a water dispersion of a particulate polymer Y.

The water dispersion of the particulate polymer Y obtained in this manner was adjusted to pH 8 through addition of 8% sodium hydroxide aqueous solution to yield a water dispersion of the particulate polymer Y. Note that the obtained particulate polymer Y was water-insoluble according to the definition in the present specification. The volume-average particle diameter of the particulate polymer Y was measured as previously described and was determined to be 135 nm.

### <Production of slurry composition for positive electrode>

A planetary mixer was used to mix (15 rpm, 15 minutes) 96.5 parts of olivine-type lithium iron phosphate (LiFePO₄) (average particle diameter: 1 µm) as a positive electrode active material and 1.5 parts of acetylene black as a conductive material. Thereafter, 1.0 parts (in terms of solid content) of the aqueous solution of the polymer X as a binder composition and deionized water were added, the solid content concentration was adjusted to 78%, and mixing was performed in the planetary mixer (60 rpm, 50 minutes). The viscosity of the slurry composition was then adjusted to within a range of 3,000 mPa·s to 4,000 mPa·s through addition of water. Next, 1.0 parts (in terms of solid content) of the water dispersion of the particulate polymer Y was added and was mixed using the planetary mixer (40 rpm, 10 minutes) to produce a slurry composition for a positive electrode. Finally, the viscosity of the slurry composition was adjusted to within a range of 1,000 mPa·s to 2,000 mPa·s through addition of water. The dispersibility of the obtained slurry composition for a positive electrode was evaluated as previously described. The result is shown in Table 1. Note that in production of the slurry composition for a positive electrode, the viscosity of the obtained slurry composition for a positive electrode was measured by a single-cylinder rotational viscometer (Brookfield B-type viscometer) in accordance with JIS Z8803:1991. The measurement conditions were a temperature of 25°C and a rotation speed of 60 rpm.

### <Production of conductive adhesive layer-equipped current collector>

A conductive adhesive layer-equipped current collector produced by a method described below was used as a current collector used in production of a positive electrode.

A conductive adhesive was produced by adding together 70 parts of conductive carbon (graphite/acetylene black = 70/30 (mass ratio)) and 8 parts of carboxymethyl cellulose (DAICEL 1220 produced by Daicel Corporation) as a dispersant, stirring these materials at 3,000 rpm for 60 minutes using a disper blade, subsequently adding 22 parts in terms of solid content of the water dispersion of the particulate polymer, and performing a further 10 minutes of stirring at 1,500 rpm using the disper blade.

The conductive adhesive was applied onto aluminum foil serving as a current collector substrate by casting using a roll bar with a forming rate of 20 m/min and was then dried at 80°C to form a conductive adhesive layer of 1 µm in thickness. In this manner, a conductive adhesive layer-equipped current collector having a conductive adhesive layer formed on the current collector substrate was obtained.

### <Production of positive electrode for lithium ion secondary battery>

The slurry composition for a positive electrode obtained as described above was applied onto the surface at the conductive adhesive layer-side of the conductive adhesive layer-equipped current collector by a comma coater such as to have a mass per unit area after drying of 25 mg/cm², was dried at 90°C for 20 minutes and at 120°C for 20 minutes, and was subsequently heat treated at 60°C for 10 hours to obtain a positive electrode web. The positive electrode web was rolled by roll pressing to produce a sheet-shaped positive electrode including a positive electrode mixed material layer of 2.5 g/cm³ in density, a conductive adhesive layer, and aluminum foil. The sheet-shaped positive electrode was cut to 48.0 mm in width and 47 cm in length to obtain a positive electrode for a lithium ion secondary battery.

The obtained positive electrode for a lithium ion secondary battery was used to evaluate close adherence to the current collector and flexibility of the positive electrode mixed material layer. The results are shown in Table 1.

### <Production of negative electrode for lithium ion secondary battery>

A 5 MPa pressure-resistant vessel equipped with a stirrer was charged with 65 parts of styrene as an aromatic vinyl monomer, 35 parts of 1,3-butadiene as an aliphatic conjugated diene monomer, 2 parts of itaconic acid as an ethylenically unsaturated carboxylic acid monomer, 1 part of 2-hydroxyethyl acrylate as a hydroxy group-containing monomer, 0.3 parts of t-dodecyl mercaptan as a molecular weight modifier, 5 parts of sodium dodecylbenzenesulfonate as an emulsifier, 150 parts of deionized water as a solvent, and 1 part of potassium persulfate as a polymerization initiator. These materials were thoroughly stirred and were then heated to 55°C to initiate polymerization.

Cooling was performed to quench the reaction at the point at which monomer consumption reached 95.0%. A water dispersion containing a polymer that was obtained in this manner was adjusted to pH 8 through addition of 5% sodium hydroxide aqueous solution. Unreacted monomer was subsequently removed through thermal-vacuum distillation. Thereafter, cooling was performed to 30°C or lower to yield a water dispersion of a particulate polymer as a binder for a negative electrode.

A planetary mixer was charged with 48.75 parts of artificial graphite and 48.75 parts of natural graphite as negative electrode active materials and 1 part (in terms of solid content) of carboxymethyl cellulose as a thickener. These materials were diluted to a solid content concentration of 60% with deionized water and were subsequently kneaded at a rotation speed of 45 rpm for 60 minutes. Thereafter, 1.5 parts in terms of solid content of the water dispersion of the particulate polymer as a binder for a negative electrode that was obtained as described above was added and was kneaded therewith at a rotation speed of 40 rpm for 40 minutes. The viscosity was adjusted to 3,000 ± 500 mPa·s (measured by B-type viscometer at 25°C and 60 rpm) through addition of deionized water to produce a slurry composition for a negative electrode.

The slurry composition for a negative electrode was applied onto the surface of copper foil of 15 µm in thickness serving as a current collector by a comma coater such as to have a coating weight of 12.5 ± 0.5 mg/cm². Thereafter, the copper foil with the slurry composition for a negative electrode applied thereon was conveyed inside an oven having a temperature of 80°C for 2 minutes and an oven having a temperature of 110°C for 2 minutes at a speed of 400 mm/min so as to dry the slurry composition for a negative electrode on the copper foil and obtain a negative electrode web having a negative electrode mixed material layer formed on the current collector.

This negative electrode web was rolled by roll pressing to produce a sheet-shaped negative electrode including a negative electrode mixed material layer of 1.6 g/cm³ in density and copper foil. The sheet-shaped negative electrode was cut to 50.0 mm in width and 52 cm in length to obtain a negative electrode for a lithium ion secondary battery.

### <Production of lithium ion secondary battery>

The produced positive electrode for a lithium ion secondary battery and negative electrode for a lithium ion secondary battery were wound up using a core of 20 mm in diameter with the respective electrode mixed material layers thereof facing each other and with a separator of 15 µm in thickness (microporous membrane made of polyethylene) interposed therebetween to obtain a roll. The obtained roll was compressed to a thickness of 4.5 mm from one direction at a rate of 10 mm/s. Note that the compressed roll had an elliptical shape in plan view, and the ratio of the major axis to the minor axis (major axis/minor axis) was 7.7.

In addition, a LiPF₆ solution of 1.0 M in concentration (solvent: mixed solvent of ethylene carbonate (EC)/ethyl methyl carbonate (EMC) = 3/7 (volume ratio); additive: containing 2 volume% (solvent ratio) of vinylene carbonate) was prepared as an electrolyte solution.

Thereafter, the compressed roll was housed inside of a laminate case made of aluminum together with 3.2 g of the electrolyte solution. After connecting a nickel lead at a specific position on the negative electrode for a secondary battery and connecting an aluminum lead at a specific position on the positive electrode for a lithium ion secondary battery, an opening of the case was thermally sealed to obtain a lithium ion secondary battery. This lithium ion secondary battery had a pouch shape of 35 mm in width, 60 mm in height, and 5 mm in thickness. The nominal capacity of the battery was 700 mAh.

The output characteristics and cycle characteristics of the obtained lithium ion secondary battery were evaluated as previously described. The results are shown in Table 1.

### (Example 2)

Various operations, measurements, and evaluations were performed in the same way as in Example 1 with the exception that a particulate polymer produced as described below was used as a particulate polymer Y including a hydrophilic group. The results are shown in Table 1.

### <Production of particulate polymer Y>

A particulate polymer Y including a hydrophilic group (hydrophilic group-containing conjugated diene polymer) was produced according to the following procedure.

A 5 MPa pressure-resistant vessel equipped with a stirrer was charged with 63 parts of styrene as an aromatic vinyl monomer, 34 parts of 1,3-butadiene as an aliphatic conjugated diene monomer, 2 parts of itaconic acid and 1 part of 2-hydroxyethyl acrylate as hydrophilic group-containing monomers, 0.3 parts of t-dodecyl mercaptan as a molecular weight modifier, 5 parts of sodium dodecylbenzenesulfonate as an emulsifier, 150 parts of deionized water as a solvent, and 1 part of potassium persulfate as a polymerization initiator. These materials were thoroughly stirred and were then heated to 55°C to initiate polymerization.

Cooling was performed to quench the reaction at the point at which monomer consumption reached 95.0%. A water dispersion containing a polymer that was obtained in this manner was adjusted to pH 8 through addition of 5% sodium hydroxide aqueous solution. Unreacted monomer was subsequently removed through thermal-vacuum distillation. Thereafter, cooling was performed to 30°C or lower to yield a water dispersion of a particulate polymer. Note that the obtained particulate polymer Y was water-insoluble according to the definition in the present specification. The volume-average particle diameter of the particulate polymer Y was measured as previously described and was determined to be 150 nm.

### (Example 3)

Various operations, measurements, and evaluations were performed in the same way as in Example 1 with the exception that a polymer produced as described below was used as a polymer X. The results are shown in Table 1.

### <Production of polymer X (hydrogenated rubber)>

First, a water dispersion of a polymer precursor was obtained in the same way as in Example 1. Next, the obtained water dispersion of the polymer precursor and a palladium catalyst (solution obtained by mixing 1% palladium acetate acetone solution with an equal weight of deionized water) were loaded into an autoclave such that the palladium content was 3,000 ppm relative to the weight of solid content contained in the water dispersion, and a hydrogenation reaction was performed at a hydrogen pressure of 3 MPa and a temperature of 55°C for 3 hours to yield a water dispersion of a target polymer X (hydrogenated rubber). Thereafter, the contents were restored to normal temperature, the system was converted to a nitrogen atmosphere, and then the water dispersion was concentrated to a solid content concentration of 40% using an evaporator. Next, the concentrated water dispersion of the polymer X was adjusted to a pH of 8.5 and a solid content concentration of 8% through addition of 8.0% NaOH aqueous solution and deionized water to yield the polymer X. The polymer X was a polymer including an alkylene structural unit since it included units resulting from almost complete hydrogenation of monomer units derived from 1,3-butadiene. Moreover, the polymer X was a water-soluble polymer according to the definition in the present specification. The weight-average molecular weight and molecular weight distribution of the obtained polymer X were determined as previously described. The results are shown in Table 1.

### (Examples 4 to 11 and Comparative Examples 1 and 2)

Various operations, measurements, and evaluations were performed in the same way as in Example 1 with the exception that in production of the polymer X, the chemical composition of the monomer composition was changed such that the chemical composition of the polymer X was as indicated in Table 1. The results are shown in Table 1.

Note that the polymer produced in Comparative Example 2 did not satisfy the condition of water-solubility according to the definition in the present specification.

### (Example 12)

Various operations, measurements, and evaluations were performed in the same way as in Example 1 with the exception that in production of the slurry composition for a positive electrode, a CNT dispersion liquid was produced and then this CNT dispersion liquid was used in production of the slurry composition for a positive electrode as described below. The results are shown in Table 1.

### <Production of CNT dispersion liquid>

A CNT dispersion liquid having a solid content concentration of 1 mass% was produced by using a disper blade to stir (3,000 rpm, 10 minutes) 0.4 parts of carbon nanotubes (BET specific surface area: 250 m²/g) as a conductive material, 0.6 parts (in terms of solid content) of carboxymethyl cellulose (DAICEL 1220 produced by Daicel Corporation), and 99 parts of deionized water, and subsequently using a bead mill in which zirconia beads of 1 mm in diameter were used to perform 1 hour of mixing at a circumferential speed of 8 m/s.

### <Production of slurry composition for positive electrode>

A planetary mixer was used to mix (15 rpm, 15 minutes) 96.5 parts of olivine-type lithium iron phosphate (LiFePO₄) (average particle diameter: 1 µm) as a positive electrode active material and 1.5 parts of acetylene black as a conductive material. Thereafter, 1.0 parts (in terms of solid content) of the aqueous solution of the polymer X as a binder composition and deionized water were added, the solid content concentration was adjusted to 78%, and mixing was performed in the planetary mixer (60 rpm, 50 minutes). Next, the CNT dispersion liquid was added such that the additive amount of the carbon nanotubes was 0.1 parts and was mixed by the planetary mixer (60 rpm, 10 minutes). The viscosity of the slurry composition was then adjusted to within a range of 3,000 mPa·s to 4,000 mPa·s through addition of water. Next, 1.0 parts (in terms of solid content) of the water dispersion of the particulate polymer Y was added and was mixed by the planetary mixer (40 rpm, 10 minutes) to produce a slurry composition for a positive electrode. Finally, the viscosity of the slurry composition was adjusted to within a range of 1,000 mPa·s to 2,000 mPa·s through addition of water. The dispersibility of the obtained slurry composition for a positive electrode was evaluated. The result is shown in Table 1. Note that in production of the slurry composition for a positive electrode, the viscosity of the obtained slurry composition for a positive electrode was measured using a single-cylinder rotational viscometer (Brookfield B-type viscometer) in accordance with JIS Z8803:1991. The measurement conditions were a temperature of 25°C and a rotation speed of 60 rpm.

### (Example 13)

Various operations, measurements, and evaluations were performed in the same way as in Example 1 with the exception that in production of a slurry composition for a positive electrode as described below, a component corresponding to a particulate polymer Y was not compounded. The results are shown in Table 1.

### <Production of slurry composition for positive electrode>

A planetary mixer was used to mix (15 rpm, 15 minutes) 96.5 parts of olivine-type lithium iron phosphate (LiFePO₄) (average particle diameter: 1 µm) as a positive electrode active material and 1.5 parts of acetylene black as a conductive material. Thereafter, 2.0 parts (in terms of solid content) of the aqueous solution of the polymer X as a binder composition and deionized water were added, the solid content concentration was adjusted to 78%, and mixing was performed in the planetary mixer (60 rpm, 50 minutes). Next, the viscosity of the slurry composition was adjusted to within a range of 3,000 mPa·s to 4,000 mPa·s through addition of water. Finally, the viscosity of the slurry composition was adjusted to within a range of 1,000 mPa·s to 2,000 mPa·s through addition of water. The dispersibility of the obtained slurry composition for a positive electrode was evaluated. The result is shown in Table 1. Note that in production of the slurry composition for a positive electrode, the viscosity of the obtained slurry composition for a positive electrode was measured using a single-cylinder rotational viscometer (Brookfield B-type viscometer) in accordance with JIS Z8803:1991. The measurement conditions were a temperature of 25°C and a rotation speed of 60 rpm.

In Table 1, shown below:
"LFP" indicates olivine-type lithium iron phosphate;
"HEMA" indicates 2-hydroxyethyl methacrylate unit;
"BD" indicates 1,3-butadiene unit;
"MAA" indicates methacrylic acid unit;
"BA" indicates butyl acrylate unit;
"β-HEA" indicates 2-hydroxyethyl acrylate unit;
"ACR" indicates hydrophilic group-containing acrylic polymer;
"SBR" indicates hydrophilic group-containing conjugated diene polymer;
"AcB" indicates acetylene black;
"CNT" indicates carbon nanotubes; and
"IP" indicates isoprene unit.

**[Table 1]**

| | | | | Example 1 | Example 2 | Example 3 | Example 4 | Example 5 | Example 6 | Example 7 | Example 8 | Example 9 | Example 10 | Example 11 | Example 12 | Example 13 | Comparative Example 1 | Comparative Example 2 |
|---|---|---|---|---|---|---|---|---|---|---|---|---|---|---|---|---|---|---|
| Slurry composition | Electrode active material | Type | | LFP | LFP | LFP | LFP | LFP | LFP | LFP | LFP | LFP | LFP | LFP | LFP | LFP | LFP | LFP |
| | Polymer X | Hydroxy group-containing (meth)acrylic acid ester monomer unit | Proportional content [mass%] | 15 | 15 | 15 | 15 | 15 | 15 | 10 | 8 | 22 | 17 | 12 | 15 | 15 | 16 | 10 |
| | | | Type | HEMA | HEMA | HEMA | HEMA | HEMA | HEMA | β-HEA | HEMA | HEMA | HEMA | HEMA | HEMA | HEMA | HEMA | HEMA |
| | | Alkylene structural unit and conjugated diene monomer unit | Proportional content [mass%] | 35 | 35 | 35 | 35 | 28 | 42 | 37 | 38 | 32 | 35 | 35 | 35 | 35 | 22 | 60 |
| | | | Type | BD | BD | Alkylene structural unit | IP | BD | BD | BD | BD | BD | BD | BD | BD | BD | BD | BD |
| | | Acidic group-containing monomer unit | Proportional content [mass%] | 27 | 27 | 27 | 27 | 27 | 27 | 25 | 26 | 25 | 22 | 32 | 27 | 27 | 27 | 24 |
| | | | Type | MAA | MAA | MAA | MAA | MAA | MAA | MAA | MAA | MAA | MAA | MAA | MAA | MAA | MAA | MAA |
| | | Non-hydroxy group-containing (meth)acrylic acid ester monomer unit | Proportional content [mass%] | 23 | 23 | 23 | 23 | 30 | 16 | 28 | 28 | 21 | 26 | 21 | 23 | 23 | 35 | 6 |
| | | | Type | BA | BA | BA | BA | BA | BA | BA | BA | BA | BA | BA | BA | BA | BA | BA |
| | | Weight-average molecular weight [-] | | 350000 | 350000 | 280000 | 260000 | 400000 | 400000 | 250000 | 350000 | 340000 | 300000 | 300000 | 350000 | 280000 | 340000 | 270000 |
| | | Molecular weight distribution [-] | | 3 | 3 | 2.6 | 3.7 | 3.4 | 3 | 2.7 | 3 | 2.8 | 2.6 | 3 | 3 | 3 | 3.5 | 3.3 |
| | Particulate polymer Y | Type | | ACR | SBR | ACR | | | | | | | | | | | ACR | |
| | | Content [parts by mass] | | 1 | 1 | 1 | 1 | 1 | 1 | 1 | 1 | 1 | 1 | 1 | 1 | 0 | 1 | 1 |
| | Conductive additive | Type | | AcB | | | | | | | | | | | CNT, AcB | AcB | AcB | |
| Evaluation | Dispersibility of slurry composition | | | A | A | A | A | A | B | A | B | B | B | A | A | A | C | D |
| | Flexibility of electrode mixed material layer | | | A | A | B | B | B | A | A | B | B | A | B | A | A | D | D |
| | Close adherence of electrode mixed material layer | | | A | A | A | A | B | A | A | B | B | A | B | A | A | D | D |
| | Output characteristics of secondary battery | | | A | A | A | A | A | B | A | B | B | B | B | A+ | A | C | D |
| | Cycle characteristics of secondary battery | | | A | A | A | A | B | B | A | B | B | B | B | A | A | C | D |

It can be seen from Table 1 that it was possible to increase dispersibility of a slurry composition and flexibility of an electrode mixed material layer when using a polymer X that is water-soluble and in which the total proportional content of a conjugated diene monomer unit and an alkylene structural unit is not less than 25.0 mass% and not more than 58.0 mass%.

In contrast, it can be seen that dispersibility of a slurry composition and flexibility of an electrode mixed material layer were poor in Comparative Example 1 in which the total proportional content of a conjugated diene monomer unit and an alkylene structural unit in a polymer X was less than 25.0 mass% and in Comparative Example 2 in which this total proportional content was more than 58.0 mass%.

### INDUSTRIAL APPLICABILITY

According to the present disclosure, it is possible to provide a binder composition for a non-aqueous secondary battery electrode that can increase dispersibility of a slurry composition and flexibility of an electrode mixed material layer.

Moreover, according to the present disclosure, it is possible to provide a slurry composition for a non-aqueous secondary battery electrode that has excellent dispersibility and can form an electrode mixed material layer having excellent flexibility.

Furthermore, according to the present disclosure, it is possible to provide an electrode for a non-aqueous secondary battery that includes an electrode mixed material layer formed using the presently disclosed slurry composition for a non-aqueous secondary battery electrode.

Also, according to the present disclosure, it is possible to provide a non-aqueous secondary battery that includes the presently disclosed electrode for a non-aqueous secondary battery.

## Claims

1. A binder composition for a non-aqueous secondary battery electrode comprising a polymer X and water, wherein
the polymer X is water soluble and has a total proportional content of a conjugated diene monomer unit and an alkylene structural unit of not less than 25.0 mass% and not more than 58.0 mass%.

2. The binder composition for a non-aqueous secondary battery electrode according to claim 1, wherein the polymer X includes a hydroxy group-containing (meth)acrylic acid ester monomer unit in a proportion of not less than 5.0 mass% and not more than 25.0 mass%.

3. The binder composition for a non-aqueous secondary battery electrode according to claim 1, wherein the polymer X includes an acidic group-containing monomer unit in a proportion of not less than 20.0 mass% and not more than 35.0 mass%.

4. The binder composition for a non-aqueous secondary battery electrode according to claim 1, wherein the polymer X includes a non-hydroxy group-containing (meth)acrylic acid ester monomer unit in a proportion of not less than 10.0 mass% and not more than 40.0 mass%.

5. The binder composition for a non-aqueous secondary battery electrode according to claim 1, wherein the polymer X has a weight-average molecular weight of not less than 100,000 and not more than 1,000,000.

6. A slurry composition for a non-aqueous secondary battery electrode comprising: an electrode active material; and the binder composition for a non-aqueous secondary battery electrode according to any one of claims 1 to 5.

7. The slurry composition for a non-aqueous secondary battery electrode according to claim 6, further comprising a particulate polymer Y that includes a hydrophilic group.

8. The slurry composition for a non-aqueous secondary battery electrode according to claim 7, wherein proportional content of the particulate polymer Y is 5 mass% or less when all solid content contained in the slurry composition for a non-aqueous secondary battery electrode is taken to be 100 mass%.

9. The slurry composition for a non-aqueous secondary battery electrode according to claim 8, wherein the electrode active material includes a lithium-containing complex metal oxide having an olivine structure.

10. The slurry composition for a non-aqueous secondary battery electrode according to claim 7, further comprising a conductive material that includes either or both of a particulate conductive material and one or more carbon nanotubes.

11. An electrode for a non-aqueous secondary battery comprising an electrode mixed material layer formed using the slurry composition for a non-aqueous secondary battery electrode according to claim 10.

12. A non-aqueous secondary battery comprising the electrode for a non-aqueous secondary battery according to claim 11.
